# FASCICULE DE BREVET EUROPEEN

(11) **EP 2 808 144 B1**
(45) Date de publication et mention de la délivrance du brevet: **20.04.2016**
(21) Numéro de dépôt: 14170422.1
(22) Date de dépôt: 28.05.2014
(51) Int. Cl.: B29B 7/72, B29B 7/74, B29B 7/76, B29C 67/24, B29C 70/48, B29C 70/52

(54) **Dispositif et procédé de mélange d'au moins deux matériaux thermoplastiques**
Vorrichtung und Verfahren zum Mischen von mindestens zwei thermoplastischen Materialien
Device and method for mixing at least two thermoplastic materials

(30) Priorité: 31.05.2013 FR 1355013
(43) Date de publication de la demande: 03.12.2014
(73) Titulaire: Faurecia Automotive Composites, 92000 Nanterre (FR)
(72) Inventeur: Amosse, Yannick Eugène Jean Marie, 44470 Carquefou (FR); Nedelec, Gilles Alain Guillaume, 53000 Laval (FR); Ledoux, Christophe Philippe René, 35400 Saint Malo (FR)
(74) Mandataire: Blot, Philippe Robert Emile

(56) Documents cités:
- EP-A1- 2 366 525
- EP-A1- 2 808 145
- EP-A2- 0 225 604
- EP-A2- 0 494 453
- DE-A1-102010 000 856
- JP-A- S56 136 346
- US-A- 4 854 713
- US-A- 5 958 991
- US-A- 6 102 304
- US-A- 6 126 039
- US-B1- 6 280 692

## Description

La présente invention concerne un dispositif de mélange d'au moins deux matériaux thermoplastiques afin de former un élément en matériau composite thermoplastique comprenant lesdits deux matériaux thermoplastiques, du type d'un dispositif comprenant :
- au moins deux circuits d'acheminement d'un matériau thermoplastique, chaque circuit d'acheminement comprenant au moins une cuve de stockage d'un matériau thermoplastique et un ensemble de pompage du matériau thermoplastique, ledit ensemble comprenant une entrée et une sortie, l'entrée dudit ensemble étant en communication fluidique avec la cuve de stockage,
- un dispositif de commande des ensembles de pompage destiné à piloter lesdits ensembles de pompage,
- une chambre de mélange des matériaux thermoplastiques issus de chaque cuve, ladite chambre étant en communication fluidique avec la sortie de chacun des ensembles de pompage.

La présente invention concerne également un procédé de mélange d'au moins deux matériaux thermoplastiques utilisant un tel dispositif.

La présente invention s'applique à la réalisation d'éléments en matériau composite thermoplastique par exemple pour l'industrie automobile. De tels éléments sont par exemple réalisés par injection du matériau composite dans une cavité d'injection présentant la forme de l'élément à réaliser.

Le matériau composite comprend au moins deux matériaux thermoplastiques qui sont mélangés entre eux dans une chambre de mélange d'un dispositif de mélange, préalablement à l'injection du matériau issu de ce mélange dans la cavité d'injection. Les documents EP-2 366 525, DE-2 637 355 et DE-4 411 161 décrivent par exemple de tels dispositifs de mélange. Par exemple, le dispositif de mélange de EP 2 366 525 comprend deux circuits d'acheminement de deux matériaux contenus chacun dans une cuve alimentant une chambre de mélange au moyen d'un ensemble de pompage et d'un dispositif de commande, l'alimentation s'effectuant en fonction des débits mesurés par des moyens de mesure du débit entre l'ensemble de pompage et la chambre de mélange.

Le mélange est réalisé juste avant l'injection à haute température, les matériaux thermoplastiques employés étant solides à température ambiante et liquides à haute température.

Les dispositifs de mélange connus ne permettent cependant pas de maîtriser parfaitement les propriétés des matériaux dans la chambre de mélange, tout en ayant un débit satisfaisant aux cadences industrielles. Il est en effet fondamental de maîtriser les paramètres du mélange afin d'obtenir un matériau composite ayant les propriétés souhaitées une fois refroidi, notamment en terme de caractéristiques mécaniques.

L'un des buts de l'invention est de proposer un dispositif de mélange permettant de maîtriser les caractéristiques des matériaux thermoplastiques avant leur mélange afin d'obtenir le matériau composite souhaité, tout en étant compatible avec des cadences industrielles.

A cet effet, l'invention concerne un dispositif de mélange du type précité, comprenant des moyens de mesure du débit de matériau thermoplastique entre la sortie de chaque ensemble de pompage et la chambre de mélange, le dispositif de commande étant apte à piloter lesdits ensembles de pompage en fonction des débits mesurés par les moyens de mesure du débit de sorte à adapter l'un par rapport à l'autre le ratio massique des deux matériaux thermoplastiques introduits dans la chambre de mélange et à maîtriser les caractéristiques mécaniques et thermiques du matériau composite obtenu.

En maîtrisant le débit de chacun des matériaux thermoplastiques préalablement à leur mélange et en continu, il est possible d'ajuster très finement le ratio massique d'un des matériaux par rapport à l'autre. Cette maîtrise permet d'obtenir une homogénéité des caractéristiques mécaniques et thermiques du matériau composite thermoplastique obtenu, de sorte qu'un élément réalisé à partir d'un tel matériau présentera les propriétés souhaitées.

Selon une autre caractéristique du dispositif de mélange selon l'invention, le dispositif comprend en outre des moyens de mesure de la température du matériau thermoplastique dans chaque circuit d'acheminement et des moyens de chauffage dudit matériau dans chaque circuit, le dispositif de commande étant apte à piloter lesdits moyens de chauffage en fonction des températures mesurées par les moyens de mesure de sorte à adapter l'une à l'autre les viscosités des deux matériaux thermoplastiques introduits dans la chambre de mélange et à maîtriser la viscosité du matériau composite obtenu.

En maîtrisant la température de chacun des matériaux thermoplastiques préalablement à leur mélange et en continu, il est possible d'ajuster très finement la viscosité d'un des matériaux par rapport à l'autre, ce qui permet d'obtenir un matériau composite dont la viscosité est maîtrisée. Ainsi, la vitesse et le temps d'injection du matériau composite peuvent être optimisés afin d'obtenir des cadences de production accrues. Dans le cas où le matériau composite forme une matrice dans laquelle des fibres, telles que des fibres de verre, sont noyées, le dispositif permet également d'optimiser l'imprégnation des fibres par le matériau composite en maîtrisant sa viscosité.

Selon d'autres caractéristiques du dispositif de mélange selon l'invention :
- chaque cuve est disposée dans une enceinte thermorégulée contenant un fluide caloporteur, les moyens de chauffage comprenant des moyens de chauffage du fluide caloporteur dans l'enceinte ;
- les deux cuves sont disposées dans la même enceinte thermorégulée, la modification de la température du fluide caloporteur entraînant une modification de la température des deux matériaux thermoplastiques ;
- le dispositif comprend des moyens de chauffage du matériau thermoplastique entre la cuve et la chambre de mélange, lesdits moyens de chauffage permettant de modifier la température d'un matériau thermoplastique indépendamment de l'autre matériau thermoplastique ;
- chaque circuit d'acheminement comprend des moyens de mesure de la pression du matériau thermoplastique entre la sortie de l'ensemble de pompage et la chambre de mélange, le dispositif de commande étant apte à piloter les ensembles de pompage et/ou les moyens de chauffage en fonction de la pression mesurée ;
- il comprend des moyens d'injection d'un gaz inerte dans chaque cuve, le dispositif de commande étant apte à piloter lesdits moyens d'injection de sorte à combler par un gaz inerte le volume de la cuve non occupé par le matériau thermoplastique ;
- chaque circuit d'acheminement comprend une vanne trois voies disposée entre la sortie de l'ensemble de pompage et la chambre de mélange, ladite vanne étant en communication fluidique avec la cuve ou avec la chambre de mélange de sorte que le matériau thermoplastique issue de la cuve peut être envoyé vers la chambre de mélange ou vers la cuve en fonction de la configuration de ladite vanne ; et
- la chambre de mélange comprend une sortie formant une buse d'injection du matériau composite thermoplastique obtenu par le mélange des deux matériaux thermoplastiques.

L'invention concerne également un procédé de mélange d'au moins deux matériaux thermoplastiques afin de former un élément en matériau composite thermoplastique au moyen d'un dispositif de mélange tel que décrit ci-dessus, du type comprenant une étape d'acheminement de deux matériaux thermoplastiques dans une chambre de mélange du dispositif de mélange de sorte à former dans ladite chambre un matériau composite thermoplastique et comprenant en outre au moins une étape de mesure du débit de chacun des matériaux thermoplastiques au cours de leur acheminement et une étape d'adaptation du débit de chacun desdits matériaux en fonction des débits mesurés, de sorte à adapter l'un par rapport à l'autre le ratio massique des deux matériaux thermoplastiques introduits dans la chambre de mélange et à maîtriser les caractéristiques mécaniques et thermiques du matériau composite obtenu.

Selon une autre caractéristique du procédé selon l'invention, le procédé comprend une étape de mesure de la température de chacun des matériaux thermoplastiques au cours de leur acheminement et une étape d'adaptation de la température de chacun desdits matériaux en fonction des températures mesurées, de sorte à adapter l'une à l'autre les viscosités des deux matériaux thermoplastiques introduits dans la chambre de mélange et à maîtriser la viscosité du matériau composite obtenu.

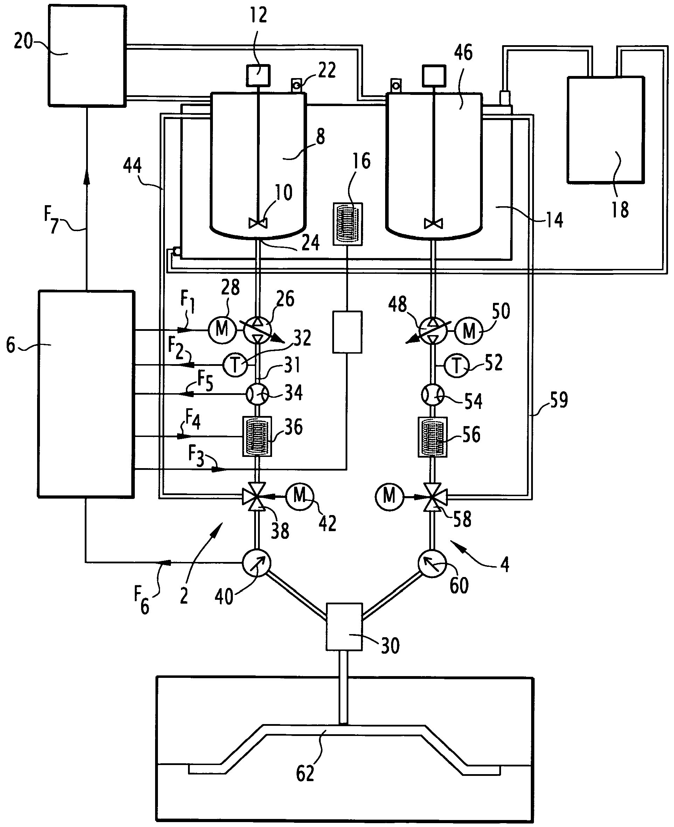

D'autres aspects et avantages de l'invention apparaîtront à la lecture de la description qui suit, donnée à titre d'exemple et faite en référence au dessin annexé, dans lequel la Fig. 1 est une représentation schématique en coupe d'un dispositif de mélange selon l'invention.

Dans la description, les termes « amont » et « aval » sont définis par rapport à la direction de circulation des matériaux thermoplastiques d'une source de ces matériaux à une chambre de mélange de ces matériaux.

Le dispositif de mélange selon l'invention permet d'obtenir un matériau composite thermoplastique à partir du mélange d'au moins un premier matériau thermoplastique et d'un deuxième matériau thermoplastique. On désigne par matériau thermoplastique, un matériau plastique ou un mélange de matériaux plastiques et d'additifs, comme par exemple un catalyseur et/ou un durcisseur, qui sont solides à température ambiante et liquide à haute température, par exemple au voisinage de 110°C.

Le premier matériau thermoplastique peut par exemple être un matériau choisi parmi la famille des caprolactames éventuellement mélangés à un catalyseur et le deuxième matériau thermoplastique peut par exemple être un matériau choisi parmi la famille des caprolactames éventuellement mélangés à un catalyseur. L'invention n'est cependant pas limitée au mélange de deux matériaux et peut simplement être adaptée pour le mélange de trois matériaux thermoplastiques ou plus entre eux.

Le dispositif de mélange comprend essentiellement un premier circuit d'acheminement 2 du premier matériau thermoplastique et un deuxième circuit d'acheminement 4 du deuxième matériau thermoplastique, l'acheminement des premier et deuxième matériaux thermoplastiques étant commandés par un dispositif de commande 6, connecté aux premier et deuxième circuits 2 et 4. Pour des raisons de simplification, seules les connections entre le premier circuit 2 et le dispositif de commande 6 ont été représentées sur la figure.

Le premier et le deuxième circuits 2 et 4 étant sensiblement identiques, seul le premier circuit 2 et ses connexions avec le dispositif de commande 6 seront décrits en détail par la suite.

Le premier circuit 2 comprend en amont une cuve 8 dans laquelle le premier matériau thermoplastique est stocké. Un agitateur 10, piloté par un moteur 12, est plongé dans la cuve 8 afin d'agiter le matériau thermoplastique, qui est stocké à l'état liquide dans la cuve 8.

Afin de maintenir le matériau thermoplastique à l'état liquide, la cuve 8 est disposée dans une enceinte thermorégulée 14 permettant de maintenir le contenu de la cuve 8 à une température souhaitée. Une telle enceinte 14 est par exemple formée en prévoyant une cuve 8 ayant deux parois, l'une délimitant le volume interne de la cuve 8, dans lequel le matériau thermoplastique est stocké, et l'autre entourant la première paroi en laissant un espace entre les deux parois. Cet espace est rempli par un fluide caloporteur, par exemple de l'eau ou de l'huile, dont la température est commandée afin de régler la température à l'intérieur du volume interne. La commande de la température du fluide caloporteur se fait par exemple par un thermoplongeur 16, disposé dans l'enceinte 14, et/ou un thermorégulateur 18, en communication fluidique avec l'enceinte 14, reliés au dispositif de commande 6, qui est agencé pour émettre des consignes de température au thermoplongeur 16 et/ou au thermorégulateur 18, comme cela sera décrit ultérieurement.

Le volume interne de la cuve 8 est isolé de l'atmosphère extérieure, afin d'éviter tout contact entre le matériau thermoplastique et cette atmosphère. En outre, la cuve 8 est par exemple reliée à des moyens d'injection 20 d'un gaz inerte à l'intérieur du volume interne de la cuve 8. Ces moyens d'injection 20, reliés au dispositif de commande 6 et commandés par celui-ci, sont agencés pour injecter un gaz inerte dans le volume interne de la cuve 8 afin de remplir le volume non occupé par le matériau thermoplastique. De cette manière, on évite tout contact entre le matériau thermoplastique et l'humidité ambiante, un tel contact pouvant dégrader le matériau thermoplastique contenu dans la cuve. Afin d'éviter des phénomènes de surpression lors de l'injection du gaz inerte, une soupape 22 est par exemple prévue sur le couvercle de la cuve 8.

La cuve 8 comprend une sortie 24 permettant l'écoulement du matériau thermoplastique vers l'aval dans le reste du circuit d'acheminement 2. La sortie 24 est en communication fluidique avec l'entrée d'une pompe 26 d'un ensemble de pompage, comprenant en outre un moteur 28 d'actionnement de la pompe 26 relié au dispositif de commande 6.

Par communication fluidique, on entend que la sortie 24 est reliée à la pompe par une tuyère appropriée permettant la circulation du matériau thermoplastique. Une telle tuyère, ainsi que les autres tuyères du circuit d'acheminement sont par exemple formées par des tuyaux chauffants permettant de réguler la température et donc la viscosité du matériau thermoplastique circulant dans les tuyères.

La pompe 26 est formée par une pompe volumétrique, par exemple une pompe à engrenage. La pompe 26 est agencée pour prélever une quantité souhaitée de matériau thermoplastique et pour la faire circuler vers l'aval de la pompe dans le reste du circuit d'acheminement. En commandant le moteur 28 par le dispositif de commande 6, il est possible de régler le débit de la pompe 26 et donc le débit de matériau thermoplastique circulant dans le circuit d'acheminement, comme cela sera décrit ultérieurement.

La pompe 26 est agencée pour faire circuler le matériau thermoplastique vers une chambre de mélange 30 disposée en aval de l'ensemble de pompage grâce à des tuyères 31 appropriées, dont une est reliée à la sortie de la pompe 26 et dont une est reliée à l'entrée de la chambre de mélange 30 de sorte à mettre en communication fluidique la pompe 26 avec la chambre de mélange 30.

Entre la pompe 26 et la chambre de mélange 30, le circuit d'acheminement comprend des moyens de mesure de la température du matériau thermoplastique 32, des moyens de mesure du débit du matériau thermoplastique 34, des moyens de chauffage du matériau thermoplastique 36, une vanne trois voies 38 et des moyens de mesure de la pression du matériau thermoplastique 40 en amont de la chambre de mélange 30.

Les moyens de mesure de la température 32, du débit 34 et de la pression 40 sont formés par des capteurs appropriés agencés pour transmettre les mesures effectuées au dispositif de commande 6.

Les moyens de chauffage 36 sont commandés par le dispositif de commande 6 qui est apte à envoyer une consigne de température aux moyens de chauffage 36 afin de modifier la température du matériau thermoplastique circulant dans le circuit d'acheminement entre la cuve 8 et la chambre de mélange 30. Les moyens de chauffage 36 sont par exemple formés par un réchauffeur électrique.

La vanne trois voies 38 est actionnée par un moteur 42 commandé par le dispositif de commande 6 et permet soit de renvoyer le matériau thermoplastique vers la cuve 8 par une tuyère appropriée 44, soit de faire circuler le matériau thermoplastique vers la chambre de mélange 30.

Comme indiqué précédemment, le deuxième circuit d'acheminement 4 est sensiblement identique au premier circuit d'acheminement 2 et est relié de la même façon au dispositif de commande 6. Ainsi, le deuxième circuit d'acheminement 4 comprend une cuve 46, contenant le deuxième matériau thermoplastique, reliée à une autre entrée de la chambre de mélange 30 par l'intermédiaire d'une pompe 48, commandée par un moteur 50.

Le deuxième circuit d'acheminement comprend en outre :
- des moyens de mesure de la température du deuxième matériau thermoplastique 52,
- des moyens de mesure du débit du deuxième matériau thermoplastique 54,
- des moyens de chauffage du deuxième matériau thermoplastique 56,
- une vanne trois voies 58 permettant soit de renvoyer le matériau thermoplastique vers la cuve 46 par une tuyère 59 appropriée, soit de faire circuler le matériau thermoplastique vers la chambre de mélange 30, et
- des moyens de mesure de la pression du deuxième matériau thermoplastique 60 en amont de la chambre de mélange 30.

La cuve 46 est disposée dans une enceinte thermorégulée 14, par exemple la même que celle dans laquelle est disposée la cuve 8 du premier circuit d'acheminement 2. L'enceinte thermorégulée 14 est par exemple formée en prévoyant une cuve 46 double paroi, l'espace défini entre les deux parois étant en communication fluidique avec l'espace défini entre les deux parois de la cuve 8 du premier circuit d'acheminement 2, par l'intermédiaire d'un circuit de circulation du fluide caloporteur. Ainsi, en réglant la température du fluide caloporteur, on commande de la même façon la température de la cuve 8 du premier circuit d'acheminement 2 et la cuve 46 du deuxième circuit d'acheminement 4. Alternativement, les cuves 8 et 46 peuvent être disposées dans des enceintes thermorégulées séparées et la température dans chacune des cuves peut être réglée indépendamment de la température dans l'autre cuve.

Comme indiqué précédemment, le dispositif de mélange pourrait comprendre d'autres circuits d'acheminements sensiblement identiques, reliés à la chambre de mélange 30 pour réaliser un matériau composite comprenant plus de matériaux thermoplastiques différents.

La chambre de mélange 30 forme par exemple une buse d'injection du matériau composite obtenu par le mélange des premier et deuxième matériaux plastiques introduits dans la chambre de mélange 30 par les premier et deuxième circuits d'acheminement. De façon connue, une telle buse d'injection est par exemple agencée pour injecter le matériau composite dans une cavité d'injection 62 agencée pour former un élément en matériau composite, par exemple un élément de véhicule automobile ou autre. Egalement de façon connue, la buse d'injection peut être reliée à un dispositif de réalisation d'un matériau composite renforcé par des fibres et être agencée pour injecter le matériau composite dans une filière chaude, dans laquelle des fibres circulent, afin d'imprégner ces fibres avec le matériau composite thermoplastique issu de la chambre de mélange 30 et former un profilé.

Le fonctionnement du dispositif de mélange décrit ci-dessus et un procédé de mélange de matériaux thermoplastiques vont à présent être décrits.

Un premier matériau thermoplastique est stocké dans la cuve 8 du premier circuit d'acheminement 2 et un deuxième matériau thermoplastique est stocké dans la cuve 46 dans le deuxième circuit d'acheminement 4. Ces matériaux sont maintenus à l'état liquide grâce à l'enceinte thermorégulée au moyen du thermoplongeur 16 et/ou au thermorégulateur 18. La température du fluide caloporteur est réglée au moyen du dispositif de commande. Les matériaux sont également remués régulièrement au moyen des agitateurs présents dans les cuves 8 et 46 et du circuit de régulation composé des pompes 26 et 48 et des tuyères de retour 44 et 59, reliées aux vannes trois voies 38 et 58.

Lorsque l'injection d'un matériau composite commence, le dispositif de commande 6 émet, comme représenté par la flèche F₁, une commande vers les moteurs 28 et 50 des ensembles de pompage des deux circuits 2 et 4 afin d'actionner les pompes 26 et 48 et débuter l'acheminement des deux matériaux thermoplastiques vers la chambre de mélange 30.

Les matériaux sont acheminés vers la chambre de mélange dans les tuyères des deux circuits d'acheminement 2 et 4. Au cours de cette circulation, la température de chacun des matériaux est mesurée par les moyens de mesure de température 32 et 52 et ces informations sont envoyées au dispositif de commande 6, comme représenté par la flèche F₂. En fonction des températures mesurées, le dispositif de commande 6 émet des consignes de température vers les moyens de chauffage 16 et/ou 18 de l'enceinte thermorégulée 14 et/ou vers les moyens de chauffage 36, 56 des matériaux thermoplastiques, comme représenté respectivement par les flèches F₃ et F₄, ou n'émet pas de consigne particulière. Les moyens de chauffage 16, 18, 36 et/ou 56 chauffent ou arrêtent de chauffer en conséquence de ces consignes.

Les consignes de température sont émises pour modifier la viscosité de l'un ou des deux matériaux thermoplastiques acheminés vers la chambre de mélange 30.

Ainsi, à titre d'exemple, si la température mesurée est déterminée comme étant trop faible pour qu'un écoulement satisfaisant des matériaux thermoplastiques se fasse, une consigne de température peut être envoyée vers le thermoplongeur 16 et ou le thermorégulateur 18 afin d'augmenter la température du fluide caloporteur et donc celle des matériaux thermoplastiques dans les cuves 8 et 46. La viscosité des matériaux thermoplastiques est alors augmentée. Si la température de l'un des matériaux thermoplastiques est déterminée comme étant trop faible, pour obtenir un écoulement satisfaisant ou pour obtenir un mélange homogène dans la chambre de mélange par exemple, une consigne de température peut être envoyée vers les moyens de chauffage 36 du circuit d'acheminement de ce matériau thermoplastique afin d'augmenter la viscosité de ce matériau en particulier. La température dans les circuits d'acheminement est mesurée de façon continue et le dispositif de commande 6 est apte à envoyer des consignes de température en fonction des températures mesurées, ce qui permet d'ajuster finement et à tout moment la viscosité de chacun des matériaux thermoplastiques circulant dans le dispositif de mélange. La gestion de la température des matériaux thermoplastiques se fait donc en boucle fermée. Une telle maîtrise de la viscosité permet de maîtriser la viscosité du matériau composite obtenu et ainsi optimiser la vitesse et le temps d'injection de ce matériau dans la cavité d'injection 62 ou dans une filière chaude, ce qui permet d'augmenter les cadences de production.

Au cours de la circulation des matériaux thermoplastiques, le débit de chacun de ces matériaux est mesuré, de façon continue, par les moyens de mesure du débit 34 et 54. Ces informations sont envoyées au dispositif de commande 6, comme représenté par la flèche F₅. En fonction des débits mesurés, le dispositif de commande 6 émet des consignes de débit vers un des moteurs 28 ou 50 ou vers les deux moteurs 28 et 50 des ensembles de pompage ou n'émet pas de consigne particulière. Les moteurs sont actionnés en conséquence pour modifier le débit du ou des matériaux thermoplastiques par l'intermédiaire d'une ou des deux pompes 26 et 48.

Les consignes de débit sont émises en fonction soit pour modifier les ratios massiques des matériaux thermoplastiques l'un par rapport à l'autre en fonction des caractéristiques souhaitées du matériau composite thermoplastique obtenu par le mélange des deux matériaux thermoplastiques soit pour respecter en continu une consigne théorique programmée. Ainsi, si il est constaté que le ratio massique de l'un des matériaux thermoplastiques est trop faible par rapport à l'autre ou trop faible par rapport à la consigne programmée, le dispositif de commande 6 émet une consigne vers le moteur de l'ensemble de pompage du circuit d'acheminement transportant ce matériau afin d'augmenter le débit, et donc le ratio massique de ce matériau par rapport à l'autre dans le premier cas ou revenir à la consigne programmée dans le second cas.

Les débits sont mesurés en continu et ajustés en boucle fermée, ce qui permet d'obtenir une homogénéité des caractéristiques thermiques et mécaniques du matériau composite obtenu dans la chambre de mélange 30.

Les vannes trois voies 38 et 58 sont commandées pour réguler la circulation des matériaux thermoplastiques. Ainsi, au cours d'opérations d'homogénéisation et de régulation de la température des matériaux thermoplastiques, les vannes trois voies 38 et 58 sont agencées pour renvoyer les matériaux thermoplastiques vers les cuves 8 et 46 correspondantes. Au cours des opérations d'injection, les vannes trois voies 38 et 58 sont agencées pour laisser les matériaux thermoplastiques s'écouler jusqu'à la chambre de mélange 30.

En amont de la chambre de mélange 30, la pression dans chaque circuit d'acheminement est mesurée par les moyens de mesure de la pression 40 et 60 et cette mesure est envoyée vers le dispositif de commande 6, comme représenté par la flèche F₆. En fonction de ces mesures, le dispositif de commande 6 émet des consignes correspondantes. La mesure de la pression permet de sécuriser le fonctionnement du dispositif de mélange. En effet, si par exemple la température est trop faible dans un ou les deux circuits d'acheminement, la viscosité du ou des matériaux augmente, ce qui fait augmenter la pression dans les circuits et peut endommager les pompes 26 et 48. Le dispositif de commande 6 peut alors commander d'augmenter la température dans l'enceinte thermorégulée 14 et/ou dans les circuits d'acheminement ou commander l'arrêt d'urgence du pompage des matériaux thermoplastiques.

On notera que lorsque les cuves 8 et 46 se vident, le dispositif de commande 6 commande les moyens d'injection 20 en conséquence, comme représenté par la flèche F₇, pour combler le volume interne des cuves 8 et 46 par un gaz inerte. Inversement, lorsque les cuves 8 et 46 se remplissent, par exemple au cours des opérations d'homogénéisation et régulation de la température, le gaz inerte peut être évacué par les soupapes prévues sur les cuves.

Lorsque les matériaux atteignent la chambre de mélange 30, ils se mélangent entre eux afin de former un matériau composite thermoplastique, dont la viscosité et les propriétés mécaniques et thermiques sont maîtrisées grâce à la gestion en boucle fermée et en amont de la chambre de mélange 30 de la température et du débit des matériaux thermoplastiques introduits dans la chambre de mélange.

Le dispositif et le procédé décrits ci-dessus peuvent être mis en oeuvre de façon industrielle et permettent la formation en continue d'un matériau composite thermoplastique prêt à être injecté.

## Revendications

1. Dispositif de mélange d'au moins deux matériaux thermoplastiques afin de former un élément en matériau composite thermoplastique à partir desdits deux matériaux thermoplastiques, ledit dispositif comprenant :
- au moins deux circuits d'acheminement (2, 4) d'un matériau thermoplastique, chaque circuit d'acheminement comprenant au moins une cuve (8, 46) de stockage d'un matériau thermoplastique et un ensemble de pompage du matériau thermoplastique, ledit ensemble comprenant une entrée et une sortie, l'entrée dudit ensemble étant en communication fluidique avec la cuve de stockage (8, 46),
- un dispositif de commande (6) des ensembles de pompage destiné à piloter lesdits ensembles de pompage,
- une chambre de mélange (30) des matériaux thermoplastiques issus de chaque cuve (8, 46), ladite chambre (30) étant en communication fluidique avec la sortie de chacun des ensembles de pompage,
ledit dispositif de mélange comprenant en outre des moyens de mesure (34, 54) du débit de matériau thermoplastique entre la sortie de chaque ensemble de pompage et la chambre de mélange (30), le dispositif de commande (6) étant apte à piloter lesdits ensembles de pompage en fonction des débits mesurés par les moyens de mesure du débit (34, 54) de sorte à adapter l'un par rapport à l'autre le ratio massique des deux matériaux thermoplastiques introduits dans la chambre de mélange (30) et à maîtriser les caractéristiques mécaniques et thermiques du matériau composite obtenu.
**caractérisé en ce que** chaque cuve (8, 46) est disposée dans une enceinte thermorégulée (14) contenant un fluide caloporteur, les moyens de chauffage comprenant des moyens de chauffage (16, 18) du fluide caloporteur dans l'enceinte (14), lesdites deux cuves (8, 46) étant disposées dans la même enceinte thermorégulée (14), la modification de la température du fluide caloporteur entraînant une modification de la température des deux matériaux thermoplastiques.

2. Dispositif de mélange selon la revendication 1, **caractérisé en ce qu'**il comprend en outre des moyens de mesure de la température (32, 52) du matériau thermoplastique dans chaque circuit d'acheminement (2, 4) et des moyens de chauffage (16, 18, 36, 56) dudit matériau dans chaque circuit (2, 4), le dispositif de commande (6) étant apte à piloter lesdits moyens de chauffage (16, 18, 36, 56) en fonction des températures mesurées par les moyens de mesure (32, 52) de sorte à adapter l'une à l'autre les viscosités des deux matériaux thermoplastiques introduits dans la chambre de mélange (30) et à maîtriser la viscosité du matériau composite obtenu.

3. Dispositif de mélange selon la revendication 1 ou 2, **caractérisé en ce qu'**il comprend des moyens de chauffage (36, 56) du matériau thermoplastique entre la cuve (8, 46) et la chambre de mélange (30), lesdits moyens de chauffage (36, 56) permettant de modifier la température d'un matériau thermoplastique indépendamment de l'autre matériau thermoplastique.

4. Dispositif de mélange selon l'une quelconque des revendications 1 à 3, **caractérisé en ce que** chaque circuit d'acheminement (2, 4) comprend des moyens de mesure (40, 60) de la pression du matériau thermoplastique entre la sortie de l'ensemble de pompage et la chambre de mélange (30), le dispositif de commande (6) étant apte à piloter les ensembles de pompage et/ou les moyens de chauffage (16, 18, 36, 56) en fonction de la pression mesurée.

5. Dispositif de mélange selon l'une quelconque des revendications 1 à 4, **caractérisé en ce qu'**il comprend des moyens d'injection (20) d'un gaz inerte dans chaque cuve (8, 46), le dispositif de commande (6) étant apte à piloter lesdits moyens d'injection (20) de sorte à combler par un gaz inerte le volume de la cuve (8, 46) non occupé par le matériau thermoplastique.

6. Dispositif de mélange selon l'une quelconque des revendications 1 à 5, **caractérisé en ce que** chaque circuit d'acheminement (2, 4) comprend une vanne trois voies (38, 58) disposée entre la sortie de l'ensemble de pompage et la chambre de mélange (30), ladite vanne (38, 58) étant en communication fluidique avec la cuve (8, 46) ou avec la chambre de mélange (30) de sorte que le matériau thermoplastique issue de la cuve (8, 46) peut être envoyé vers la chambre de mélange (30) ou vers la cuve (8, 46) en fonction de la configuration de ladite vanne (38, 58).

7. Dispositif de mélange selon l'une quelconque des revendications 1 à 6, **caractérisé en ce que** la chambre de mélange (30) comprend une sortie formant une buse d'injection du matériau composite thermoplastique obtenu par le mélange des deux matériaux thermoplastiques.

8. Procédé de mélange d'au moins deux matériaux thermoplastiques afin de former un élément en matériau composite thermoplastique au moyen d'un dispositif de mélange selon l'une quelconque des revendications 1 à 7, ledit procédé comprenant une étape d'acheminement de deux matériaux thermoplastiques dans une chambre de mélange (30) du dispositif de mélange de sorte à former dans ladite chambre (30) un matériau composite thermoplastique, **caractérisé en ce qu'**il comprend en outre au moins une étape de mesure du débit de chacun des matériaux thermoplastiques au cours de leur acheminement et une étape d'adaptation du débit de chacun desdits matériaux en fonction des débits mesurés, de sorte à adapter l'un par rapport à l'autre le ratio massique des deux matériaux thermoplastiques introduits dans la chambre de mélange (30) et à maîtriser les caractéristiques mécaniques et thermiques du matériau composite obtenu.

9. Procédé de mélange selon la revendication 8, **caractérisé en ce qu'**il comprend une étape de mesure de la température de chacun des matériaux thermoplastiques au cours de leur acheminement et une étape d'adaptation de la température de chacun desdits matériaux en fonction des températures mesurées, de sorte à adapter l'une à l'autre les viscosités des deux matériaux thermoplastiques introduits dans la chambre de mélange (30) et à maîtriser la viscosité du matériau composite obtenu.

## Patentansprüche

1. Mischvorrichtung für mindestens zwei thermoplastische Materialien, um ein Element aus thermoplastischem Verbundmaterial aus diesen zwei thermoplastischen Materialien zu bilden, wobei die Vorrichtung umfasst:
- mindestens zwei Kreise (2, 4) zur Förderung eines thermoplastischen Materials, wobei jeder Förderkreis mindestens einen Lagerbehälter (8, 46) für ein thermoplastisches Material und eine Pumpenanordnung für das thermoplastische Material umfasst, wobei die Anordnung einen Eingang und einen Ausgangs umfasst, und der Eingang der Anordnung in fluidischer Verbindung mit dem Lagerbehälter (8, 46) ist,
- eine Steuervorrichtung (6) der Pumpenanordnungen, die vorgesehen ist, die Pumpenanordnungen zu steuern,
- eine Mischkammer (30) der aus jedem Lagerbehälter (8, 46) ausgegebenen thermoplastischen Materialien, wobei die Kammer (30) in fluidischer Verbindung mit dem Ausgang jeder Pumpenanordnung ist,
wobei die Mischvorrichtung außerdem Mittel (34, 54) zum Messen des Durchflusses des thermoplastischen Materials zwischen dem Ausgang jeder Pumpenanordnung und der Mischkammer (30) aufweist und die Steuervorrichtung (6) geeignet ist, die Pumpenanordnungen abhängig von den von den Mitteln (34, 54) zum Messen des Durchflusses gemessenen Durchflüssen derart zu steuern, dass das Massenverhältnis der zwei thermoplastischen Materialien, die in die Mischkammer (30) eingeführt werden, aneinander angeglichen und die mechanischen und thermischen Eigenschaften des erhaltenen Verbundmaterials angepasst werden,
**dadurch gekennzeichnet, dass** jeder Behälter (8, 46) in einer thermoregulierten Umfassung (14) angeordnet ist, die ein Wärmeträgerfluid enthält, wobei die Heizmittel Mittel (16, 18) zum Heizen des Wärmeträgerfluids in der Umfassung (14) umfassen, die zwei Behälter (8, 46) in derselben thermoregulierten Umfassung (14) angeordnet sind und die Veränderung der Temperatur des Wärmeträgerfluids eine Veränderung der Temperatur der zwei thermoplastischen Materialien mit sich bringt.

2. Mischvorrichtung nach Anspruch 1, **dadurch gekennzeichnet, dass** sie außerdem Mittel (32, 52) zum Messen der Temperatur des thermoplastischen Materials in jedem Förderkreis (2, 4) und Mittel (16, 18, 36, 56) zum Heizen des Materials in jedem Kreis (2, 4) umfasst, wobei die Steuervorrichtung (6) geeignet ist, die Mittel (16, 18, 36, 56) zum Heizen abhängig von den von den Mitteln (32, 52) zum Messen gemessenen Temperaturen derart zu steuern, dass die Viskositäten der zwei in die Mischkammer (30) eingeführten Materialien aneinander angeglichen werden und die Viskosität des erhaltenen Verbundmaterials angepasst wird.

3. Mischvorrichtung nach Anspruch 1 oder 2, **dadurch gekennzeichnet, dass** sie Mittel (36, 56) zum Heizen des thermoplastischen Materials zwischen dem Behälter (8, 46) und der Mischkammer (30) umfasst, wobei die Mittel (36, 56) zum Heizen gestatten, die Temperatur eines thermoplastischen Materials unabhängig von dem andern thermoplastischen Material zu verändern.

4. Mischvorrichtung nach einem beliebigen der Ansprüche 1 bis 3, **dadurch gekennzeichnet, dass** jeder Förderkreis (2, 4) Mittel (40, 60) zum Messen des Drucks des thermoplastischen Materials zwischen dem Ausgang der Pumpenanordnung und der Mischkammer (30) umfasst, wobei die Steuervorrichtung (6) geeignet ist, die Pumpenanordnungen und/oder die Mittel (16, 18, 36, 56) zum Heizen abhängig von dem gemessenen Druck zu steuern.

5. Mischvorrichtung nach einem beliebigen der Ansprüche 1 bis 4, **dadurch gekennzeichnet, dass** sie Mittel (20) zum Injizieren eines Inertgases in jeden Behälter (8, 46) umfasst, wobei die Steuervorrichtung (8) geeignet ist, die Mittel (20) zum Injizieren derart zu steuern, dass das Volumen des Behälters (8, 46), das nicht von dem thermoplastischen Material eingenommen wird, mit einem Inertgas aufgefüllt wird.

6. Mischvorrichtung nach einem beliebigen der Ansprüche 1 bis 5, **dadurch gekennzeichnet, dass** jeder Förderkreis (2, 4) ein Dreiwegeventil (38, 58) umfasst, das zwischen dem Ausgang der Pumpenanordnung und der Mischkammer (30) angeordnet ist, wobei das Ventil (38, 58) in fluidischer Verbindung mit dem Behälter (8, 46) oder der Mischkammer (30) ist, derart, dass das aus dem Behälter (8, 46) ausgegebene thermoplastische Material zu der Mischkammer (30) oder zu dem Behälter (8, 46) in Abhängigkeit von der Konfiguration des Ventils (38, 58) geschickt werden kann.

7. Mischvorrichtung nach einem beliebigen der Ansprüche 1 bis 6, **dadurch gekennzeichnet, dass** die Mischkammer (80) einen Ausgang umfasst, der eine Düse zum Einspritzen des thermoplastischen Verbundmaterials, das durch die Mischung der zwei thermoplastischen Materialien erhalten wird, bildet.

8. Verfahren zum Mischen mindestens zweier thermoplastischer Materialien, um ein Element aus einem thermoplastischen Verbundmaterial zu bilden, mittels einer Mischvorrichtung nach einem beliebigen der Ansprüche 1 bis 7, wobei das Verfahren einen Schritt der Förderung der zwei thermoplastischen Materialien in eine Mischkammer (30) der Mischvorrichtung umfasst, derart, dass in der Kammer (30) ein thermoplastisches Verbundmaterial gebildet wird, **dadurch gekennzeichnet, dass** es außerdem einen Schritt der Messung des Durchflusses jedes thermoplastischen Materials während seiner Förderung und einen Schritt der Anpassung des Durchflusses jedes der Materialien abhängig von den gemessenen Durchflüssen umfasst, derart, dass das Massenverhältnis der zwei thermoplastischen Materialien, die in die Mischkammer (30) eingeführt werden, aneinander angeglichen und die mechanischen und thermischen Eigenschaften des erhaltenen Verbundmaterials angepasst werden.

9. Mischverfahren nach Anspruch 8, **dadurch gekennzeichnet, dass** es einen Schritt der Messung der Temperatur jedes thermoplastischen Materials während seiner Förderung und einen Schritt der Anpassung der Temperatur jedes der Materialien abhängig von den gemessenen Temperaturen umfasst, derart, dass die Viskositäten der zwei in die Mischkammer (30) eingeführten thermoplastischen Materialien aneinander angeglichen werden und die Viskosität des erhaltenen Verbundmaterials angepasst wird.

## Claims

1. Device for mixing at least two thermoplastic materials so as to form an element made of a composite thermoplastic material based on said two thermoplastic materials, said device comprising:
- at least two circuits (2, 4) for routing a thermoplastic material, each routing circuit comprising at least one vessel (8, 46) for storing a thermoplastic material and an assembly for pumping the thermoplastic material, said assembly comprising an inlet and an outlet, with the inlet of said assembly being in fluid communication with said storage vessel (8, 46),
- device (6) for controlling pumping assemblies that is intended to control said pumping assemblies,
- chamber (30) for mixing the thermoplastic materials coming from each vessel (8, 46), said chamber (30) being in fluid communication with the outlet of each of the pumping assemblies,
said mixing device further comprising means (34, 54) for measuring the flow of thermoplastic material between the outlet of each pumping assembly and the mixing chamber (30), the control device (6) being capable of controlling said pumping assemblies as a function of the flows measured by said flow measuring means (34, 54), so as to adapt the mass ratio of the two thermoplastic materials that are introduced into the mixing chamber (30) relative to each other and to control the mechanical and thermal characteristics of the composite material that is obtained,
**characterised in that** each vessel (8, 46) is disposed in a thermoregulated chamber (14) containing a heat transfer fluid, the heating means comprising means (16, 18) for heating the heat transfer fluid in said chamber (14), with said two vessels (8, 46) being disposed in the same thermoregulated chamber (14), with the modification of the temperature of the heat transfer fluid causing a modification to the temperature of the two thermoplastic materials.

2. Mixing device according to claim 1, **characterised in that** it further comprises means (32, 52) for measuring the temperature of the thermoplastic material inside each routing circuit (2, 4) and means (16, 18, 36, 56) for heating said material inside each circuit (2, 4), the control device (6) being capable of controlling said heating means (16, 18, 36, 56) as a function of the temperatures measured by the measuring means (32, 52), so as to adapt the viscosities of the two thermoplastic materials that are introduced into the mixing chamber (30) relative to each other and to control the viscosity of the composite material that is obtained.

3. Mixing device according to claim 1 or 2, **characterised in that** it comprises means (36, 56) for heating the thermoplastic material between the vessel (8, 46) and the mixing chamber (30), said heating means (36, 56) allowing the temperature of one thermoplastic material to be modified independently of the other thermoplastic material.

4. Mixing device according to any one of claims 1 to 3, **characterised in that** each routing circuit (2, 4) comprises means (40, 60) for measuring the pressure of the thermoplastic material between the outlet of the pumping assembly and the mixing chamber (30), with the control device (6) being capable of controlling the pumping assemblies and/or the heating means (16, 18, 36, 56) as a function of the pressure measured.

5. Mixing device according to any one of claims 1 to 4, **characterised in that** it comprises means (20) for injecting an inert gas into each vessel (8, 46), with the control device (6) being capable of controlling said injection means (20) so as to fill the volume of the vessel (8, 46) that is not occupied by the thermoplastic material with an inert gas.

6. Mixing device according to any one of claims 1 to 5, **characterised in that** each routing circuit (2, 4) comprises a three-way valve (38, 58) that is disposed between the outlet of the pumping assembly and the mixing chamber (30), the valve (38, 58) being in fluid communication with said vessel (8, 46) or with the mixing chamber (30) so that the thermoplastic material coming from the vessel (8, 46) can be sent to the mixing chamber (30) or to said vessel (8, 46) as a function of the configuration of said valve (38, 58).

7. Mixing device according to any one of claims 1 to 6, **characterised in that** the mixing chamber (30) comprises an outlet forming a nozzle for injecting the composite thermoplastic material that is obtained by mixing the two thermoplastic materials.

8. Method for mixing at least two thermoplastic materials so as to form an element made of a composite thermoplastic material by means of a mixing device according to any one of claims 1 to 7, said method comprising a step of routing two thermoplastic materials to a mixing chamber (30) of said mixing device so as to form a composite thermoplastic material inside said chamber (30), **characterised in that** it further comprises at least one step of measuring the flow of each of the thermoplastic materials as they are being routed and a step of adapting the flow of each of said materials as a function of the measured flows, so as to adapt the mass ratio of the two thermoplastic materials introduced into the mixing chamber (30) relative to each other and to control the mechanical and thermal characteristics of the composite material that is obtained.

9. The mixing method according to claim 8, **characterised in that** it comprises a step of measuring the temperature of each of the thermoplastic materials as they are being routed and a step of adapting the temperature of each of said materials as a function of the measured temperatures, so as to adapt the viscosities of the two thermoplastic materials introduced into the mixing chamber (30) relative to each other and to control the viscosity of the composite material that is obtained.
